# EUROPÄISCHE PATENTSCHRIFT

(11) **EP 2 583 294 B1**
(45) Veröffentlichungstag und Bekanntmachung des Hinweises auf die Patenterteilung: **21.12.2016**
(21) Anmeldenummer: 11724659.5
(22) Anmeldetag: 14.06.2011
(51) Int. Cl.: H01H 13/705, H01H 13/88

(54) **VERFAHREN ZUM HERSTELLEN EINES TASTENMODULS FÜR EIN FAHRZEUG UND TASTENMODUL**
METHOD FOR PRODUCING A KEY MODULE FOR A VEHICLE AND KEY MODULE
PROCÉDÉ DE FABRICATION D'UN MODULE DE TOUCHES POUR UN VÉHICULE ET MODULE DE TOUCHES

(30) Priorität: 17.06.2010 DE 102010024141
(43) Veröffentlichungstag der Anmeldung: 24.04.2013
(73) Patentinhaber: Valeo Schalter und Sensoren GmbH, 74321 Bietigheim-Bissingen (DE)
(72) Erfinder: HENTSCHEL, Joachim, 96479 Weitramsdorf (DE); MUELLER, Otto, 96145 Sesslach (DE); HABR, Jan, 10200 Prague 10 (CZ)
(86) Internationale Anmeldenummer: PCT/EP2011/059828
(87) Internationale Veröffentlichungsnummer: WO 2011/157701

(56) Entgegenhaltungen:
- EP-A2- 1 850 359
- DE-A1- 4 116 005
- US-A- 5 348 405

## Beschreibung

Die Erfindung betrifft ein Verfahren zum Herstellen eines Tastenmoduls für ein Fahrzeug, wobei das Tastenmodul bewegliche Funktionstasten sowie unbewegliche Blindtasten aufweist. Die Funktionstasten sind jeweils mit einer Funktion in dem Fahrzeug verknüpft, während die unbeweglichen Blindtasten funktionslos sind. Die Erfindung betrifft außerdem ein Tastenmodul für ein Fahrzeug. Das Tastenmodul umfasst einen Tastenträger und zumindest eine an dem Tastenträger gehaltene Taste.

Tastenmodule, welche sowohl bewegliche Funktionstasten als auch unbewegliche Blindtasten aufweisen, sind Stand der Technik. Die Herstellung von solchen Tastenmodulen ist im Stand der Technik mit einem relativ großen Produktionsaufwand verbunden. Es kann nämlich verschiedenste Varianten von Tastenmodulen geben, die jeweils eine andere Zusammensetzung von Funktionstasten und Blindtasten aufweisen. Verschiedene Varianten von Tastenmodulen unterscheiden sich also untereinander einerseits durch die Anzahl der Funktionstasten und der Blindtasten sowie andererseits durch die Anordnung der einzelnen Tasten im Modul. Probleme bei der Herstellung von solchen Tastenmodulen bereitet insbesondere das Beschriften und/oder Lackieren einzelner Tasten. Die Funktionstasten müssen zunächst aufgefunden werden, bevor sie beispielsweise beschriftet werden. Bei einem Tastenmodul mit einer Vielzahl von Blind- und Funktionstasten ist die Handhabung, wie auch die Beschriftung mithilfe eines Lasers problematisch.

Aus der Druckschrift JP 2003 008 245 A ist ein Verfahren zum Herstellen einer Bedieneinrichtung bekannt. Es werden ein Druckknopf und ein Gehäuse für diesen Knopf in einem einzigen Herstellungsschritt bereitgestellt, nämlich durch Schweißen unterschiedlicher Materialien.

Die Druckschrift JP 1258325 A beschreibt ein Verfahren zum Herstellen eines TastSchalters. Ein Gehäuse, wie auch ein Deckel des Schalters werden in einem einzigen Herstellungsschritt bereitgestellt, nämlich in einem Gießverfahren.

Ein elektrischer Schalter ist außerdem aus dem Dokument CN 201134365 Y bekannt. EP1850359 A2 offenbart ein Verfahren zum Herstellen eines Tastenmoduls bzw. ein Tastenmodul gemäß dem Oberbegriff des Anspruchs 1 bzw. des Anspruchs 6.

Es ist Aufgabe der Erfindung, einen Weg aufzuzeigen, wie der Produktionsaufwand bei der Herstellung von Tastenmodulen, die Blindtasten einerseits sowie Funktionstasten andererseits beinhalten, auf ein Minimum reduziert werden kann.

Die Aufgabe wird erfindungsgemäß durch ein Verfahren, welches die Merkmale des Patentanspruchs 1 aufweist, wie auch durch ein Tastenmodul mit den Merkmalen gemäß Patentanspruch 6 gelöst. Vorteilhafte Ausführungen der Erfindung sind Gegenstand der abhängigen Patentansprüche und der Beschreibung.

Bei einem erfindungsgemäßen Verfahren wird ein Tastenmodul für ein Fahrzeug hergestellt, wobei das Tastenmodul bewegliche Funktionstasten, die jeweils mit einer Funktion in dem Fahrzeug verknüpft sind, wie auch unbewegliche Blindtasten aufweist, die mit keiner Funktion verknüpft sind, also funktionslos sind. Es wird ein Tastenträger mit daran angebrachten Tasten bereitgestellt, wobei alle Tasten an dem Tastenträger lösbar verriegelt und hierdurch unbeweglich sind. Es wird eine vorbestimmte Anzahl von Tasten ausgewählt, und den ausgewählten Tasten wird jeweils eine Funktion zugeordnet. Es erfolgt ein Entriegeln nur derjenigen Tasten, denen eine Funktion zugeordnet wurde, so dass aus den entriegelten Tasten Funktionstasten und aus den verriegelten Tasten Blindtasten gebildet werden.

Der erfindungsgemäße Effekt wird somit dadurch erzielt, dass bei dem Tastenmodul zunächst alle Tasten verriegelt werden und somit unbeweglich sind, wobei diese Verriegelung gelöst werden kann. Erst nach der Zuordnung der jeweiligen Funktionen einer vorbestimmten Anzahl von Tasten werden die ausgewählten Tasten entriegelt und somit beweglich. Anders als im Stand der Technik erfolgt somit das Festlegen einer bestimmten Variante des Tastenmoduls durch die Zuordnung der jeweiligen Funktionen - also beispielsweise durch ein Beschriften oder dergleichen. Der Tastenträger mit den daran angebrachten verriegelten Tasten kann daher unabhängig von der später festzulegenden Variante des Tastenmoduls bereitgestellt werden. Das erfindungsgemäße Verfahren hat somit einen wesentlichen Vorteil, nämlich dass unabhängig von der Variante des Tastenmoduls - also unabhängig von der Anzahl und der Anordnung der Funktionstasten - gleiche Tastenträger mit verriegelten Tasten, also gleiche Tastmodule hergestellt werden können. Und zwar können für alle denkbaren Varianten des Tastenmoduls jeweils gleich geartete Tastenträger mit daran angebrachten lösbar verriegelten Tasten bereitgestellt werden. Die Festlegung der Variante erfolgt nämlich in einem nachfolgenden Verfahrensschritt, nämlich durch Zuordnen der jeweiligen Funktionen sowie durch Entriegeln der ausgewählten Tasten. Bei der Herstellung der Tastenträger mit daran angebrachten verriegelten Tasten muss somit nicht zwischen verschiedenen Varianten unterschieden werden, und es können Zeit und Kosten bei der Herstellung der Tastenmodule gespart werden. Außerdem ist somit der Produktionsaufwand bei der Herstellung von Tastenmodulen auf ein Minimum reduziert. Dazu trägt auch die Tatsache bei, dass die Zuordnung der jeweiligen Funktionen - also beispielsweise die Beschriftung der ausgewählten Tasten - bei verriegelten und somit unbeweglichen Tasten erfolgt. Das Handhaben und die Beschriftung der einzelnen Tasten - nämlich beispielsweise mittels eines Lasers - sind somit deutlich einfacher als bei beweglichen Tasten.

Wie bereits ausgeführt, kann der Schritt des Zuordnens der jeweiligen Funktion beinhalten, dass die Tasten bezeichnet werden, nämlich insbesondere beschriftet und/oder lackiert werden. Gerade dann kommt der Vorteil der Erfindung vollständig zum Tragen, nämlich dass die Handhabung der Tastenmodule bei der Bezeichnung der einzelnen Tasten - insbesondere mithilfe eines Lasers - aufgrund der Verriegelung aller Tasten vereinfacht wird.

Also erfolgt das Bezeichnen der Tasten vorzugsweise durch Lasern.

Das Verriegeln der Tasten am Tastenträger erfolgt mithilfe jeweils zumindest eines Verriegelungselements der Tasten. Die Tasten werden jeweils mithilfe zumindest eines biegbaren Riegelschenkels verriegelt. Auf diesem Weg gelingt es, eine betriebssichere und rutschfeste Verriegelung der Tasten zu erzielen, die dennoch ohne viel Aufwand gelöst werden kann. Dies kann beispielsweise so aussehen, dass jede Taste jeweils eine Vielzahl von Riegelschenkeln aufweist, die von einem Basiskörper bzw. einem Betätigungselement - welcher bzw. welches durch eine Bedienperson betätigt werden kann - abstehen und sich im Inneren des Tastenträgers erstrecken. Die jeweiligen Riegelschenkel können dann zwischen einer Verriegelungsstellung, in welcher die Taste verriegelt und somit unbeweglich ist, und einer Entriegelungsstellung, in welcher die Taste entriegelt und beweglich ist, bewegt werden. In der Verriegelungsstellung können die Verriegelungselemente, insbesondere die Riegelschenkel, beispielsweise an einem Rastelement - zum Beispiel einem Vorsprung beziehungsweise einer Nase - des Tastenträgers eingerastet sein, so dass die Tasten nicht bewegt werden können. Werden nun die Verriegelungselemente in die Entriegelungsstellung bewegt - insbesondere die biegbaren Riegelschenkel in die Entriegelungsstellung gebogen -, so wird die Bewegung der Tasten freigegeben.

Es erweist sich als besonders vorteilhaft, wenn der Schritt des Entriegelns einer Taste beinhaltet, dass ein einsteckbares Halterelement in den Tastenträger eingestellt wird. Ein solches Halterelement kann dann das genannte Verriegelungselement - insbesondere den Riegelschenkel - der Taste in die Entriegelungsstellung bewegen. Auf eine solche Art und Weise wird die Entriegelung der Tasten mit geringstem Aufwand ermöglicht; eine Bedienperson muss lediglich das Halterelement in den Tastenträger einstecken, um die Taste zu entriegeln. Das Halterelement verbringt dann das zugeordnete Verriegelungselement in die Entriegelungsstellung, und die Taste ist entriegelt und beweglich. Zum Entriegeln der ausgewählten Tasten ist bevorzugt jeweils ein separates Halterelement für jede Taste vorgesehen, welches dann an entsprechender Stelle in den Tastenträger eingesteckt wird und die entsprechende Taste entriegelt. Der Tastenträger weist vorzugsweise für jede Taste eine zugeordnete Aufnahme auf, in welche jeweils ein Halterelement eingesteckt werden kann. Die Halterelemente können vorzugsweise in den Tastenträger von derjenigen Seite aufgenommen werden, die von den Tasten abgewandt ist, also etwa von einer Rückseite. Das Halterelement kann auch mehrere Funktionen aufweisen: Außer der Funktion des Entriegelns einer Taste kann das Halterelement auch die Funktion des Haltens der Taste im Tastenträger aufweisen. Das Halterelement kann nämlich - wenn es eingesteckt wird - an der Taste befestigt werden, und es kann zusammen mit der Taste bezüglich des Tastenträgers bewegt werden. Das Halterelement kann auch die Funktion der Führung der Taste am Tastenträger übernehmen; es kann ein Führungselement aufweisen, welches in einer Führung beziehungsweise einer Nut des Tastenträgers geführt werden kann.

Bevorzugt wird das einsteckbare Halterelement - nachdem es in den Tastenträger eingesteckt wird - an der Taste befestigt bzw. mit der Taste bewegungsfest verbunden, so dass eine daraus gebildete Funktionstaste zusammen mit dem Halterelement bezüglich des Tastenträgers bewegt wird. Die Befestigung der Taste an dem Halterelement kann beispielsweise mithilfe einer Rastverbindung und/oder einer Schnappverbindung oder dergleichen erfolgen. Diese Ausführungsform sorgt für eine stabile und betriebssichere Bewegung der Taste bezüglich des Tastenträgers und somit insgesamt für ein robustes Tastenmodul.

Erfindungsgemäß wird darüber hinaus ein Tastenmodul bereitgestellt, welches an das erfindungsgemäße Verfahren besonders angepasst ist. Das Tastenmodul umfasst einen Tastenträger und zumindest eine an dem Tastenträger gehaltene Taste. Es umfasst außerdem ein Verriegelungselement zum Verriegeln der Taste. Das Verriegelungselement ist zwischen einer Verriegelungsstellung, in welcher die Taste als unbewegliche Blindtaste verriegelt ist, und einer Entriegelungsstellung, in welcher die Taste als bewegliche Funktionstaste entriegelt ist, bewegbar.

Es wird somit erreicht, dass Tastenmodule unterschiedlichster Varianten ohne viel Produktionsaufwand bereitgestellt werden können. Bei dem erfindungsgemäßen Tastenmodul kann nämlich eine beliebige Anzahl von Funktionstasten vorgesehen sein; diese müssen lediglich ausgewählt und entriegelt werden. Mit dem erfindungsgemäßen Tastenmodul ist es außerdem möglich, selbiges umzugestalten: Vorhandene Blindtasten können zu Funktionstasten werden, während Funktionstasten zu Blindtasten werden können. Bei dem erfindungsgemäßen Tastenmodul können die Tasten außerdem mit geringstem Aufwand beschriftet werden; das Tastenmodul ist nämlich ohne viel Aufwand zu handhaben, wenn alle Tasten verriegelt sind.

Eine besonders stabile und rutschfeste Verriegelung der Taste kann erreicht werden, wenn die Taste das Verriegelungselement aufweist.

Das Verriegelungselement ist ein biegbarer Riegelschenkel. Auf diesem Wege gelingt es, die Verriegelung der Taste ohne viel Aufwand zu lösen, nämlich beispielsweise mithilfe eines einsteckbaren Halterelements. Ein solcher Riegelschenkel sorgt außerdem für eine standfeste Verriegelung der Taste.

Das Tastenmodul umfasst bevorzugt ein Halterelement zum Einstecken in den Tastenträger. Mittels des Halterelements kann das Verriegelungselement von der Verriegelungsstellung in die Entriegelungsstellung bewegt werden. Durch Einsatz eines einsteckbaren Halterelements kann die Entriegelung der Taste leicht realisiert werden; das Halterelement muss lediglich in den Tastenträger eingesteckt werden, und die Taste ist entriegelt.

Das Tastenmodul umfasst vorzugsweise zumindest zwei Tasten und zu jeder Taste jeweils zumindest ein genanntes Verriegelungselement. Zumindest eine der Tasten ist als unbewegliche Blindtaste verriegelt, und zumindest eine der Tasten ist als bewegliche Funktionstaste entriegelt.

Die mit Bezug auf das erfindungsgemäße Verfahren vorgestellten bevorzugten Ausführungsformen und deren Vorteile gelten entsprechend für das erfindungsgemäße Tastenmodul und umgekehrt.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: ein Flussdiagramm eines Verfahrens gemäß einer Ausführungsform der Erfindung;
- Fig. 2: in schematischer und perspektivischer Darstellung ein Tastenmodul einschließlich eines Tastenträgers, einer Taste und eines Halterelements gemäß einer Ausführungsform der Erfindung;
- Fig. 3: in schematischer und perspektivischer Darstellung eine Taste des Tastenmoduls;
- Fig. 4: in schematischer und perspektivischer Darstellung das Tastenmodul mit einer daran angebrachten Taste, wobei die Taste als unbewegliche Bedientaste verriegelt ist;
- Fig. 5: in schematischer Darstellung eine Seitenansicht des Tastenmoduls gemäß Fig. 4;
- Fig. 6: in schematischer und perspektivischer Darstellung das Tastenmodul mit einer daran angebrachten Taste, wobei ein Halterelement in den Tastenträger eingesteckt ist und somit die Taste als bewegliche Funktionstaste entriegelt ist; und
- Fig. 7: in schematischer und perspektivischer Darstellung das Tastenmodul gemäß Fig. 6.

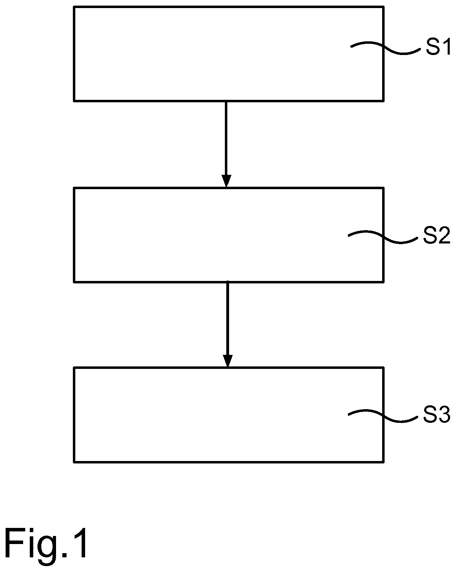

Bezug nehmend auf das Flussdiagramm, wie es in Fig. 1 dargestellt ist, wird nachfolgend ein Verfahren gemäß einer Ausführungsform der Erfindung näher erläutert. In einem ersten Schritt S1 wird ein Tastenmodul bereitgestellt, welches einen Tastenträger sowie eine Vielzahl von an dem Tastenträger gehaltenen Tasten aufweist. Das Tastenmodul wird beispielsweise zum Bedienen unterschiedlichster Funktionen in einem Fahrzeug eingesetzt. Zum Beispiel kann das Tastenmodul zum Bedienen eines Fahrerassistenzsystems eingesetzt werden.

Bei dem im Schritt S1 bereitgestellten Tastenmodul sind alle Tasten verriegelt, und es sind den Tasten noch keine Funktionen zugeordnet. Die Tasten sind dabei an dem Tastenträger lösbar verriegelt, das heißt sie können jederzeit entriegelt werden. Dies bedeutet, dass die Tasten an dem Tastenträger unbeweglich sind.

In einem nachfolgenden Schritt S2 werden eine Vielzahl von Tasten aus den vorhandenen Tasten ausgewählt. Den ausgewählten Tasten wird jeweils eine Funktion zugeordnet, nämlich beispielsweise die Ein-/Ausschaltung eines Fahrerassistenzsystems, die Ein-/Ausschaltung einer Heizung für eine Scheibe des Fahrzeugs, die Ein-/Ausschaltung einer Sitzheizung und dergleichen. Die Zuordnung der Funktionen erfolgt dabei in der Weise, dass die Tasten jeweils bezeichnet werden. Zum Beispiel können die ausgewählten Tasten beschriftet und/oder lackiert werden. Bevorzugt erfolgt die Bezeichnung der Tasten mithilfe eines Lasers.

Nach dem Schritt S2 steht somit ein Tastmodul zur Verfügung, bei welchem eine Vielzahl von Tasten bezeichnet sind, während andere Tasten unbeschriftet sind. Somit ist den bezeichneten Tasten jeweils eine Funktion logisch zugeordnet, während die unbeschrifteten Tasten funktionslos sind. Unabhängig davon, ob die Tasten bezeichnet sind oder nicht, sind jedoch im Schritt S2 noch alle Tasten des Tastenmoduls verriegelt und somit unbeweglich.

Durch die logische Zuordnung der Funktionen zu den ausgewählten Tasten wird eine Variante des Tastenmoduls festgelegt. Das Definieren der Variante beinhaltet also die Auswahl derjenigen Tasten, denen jeweils eine Funktion zugeordnet wird. Bei der Festlegung der Variante wird somit sowohl die Anzahl der Funktionstasten als auch die Anordnung der ausgewählten Funktionstasten im Tastenmodul festgesetzt.

Unterschiedliche Varianten der Tastenmodule können sich also in der Anzahl der ausgewählten Funktionstasten, wie auch in der Anordnung der ausgewählten Tasten im Tastenmodul voneinander unterscheiden. Das im Schritt S1 bereitgestellte Tastenmodul einschließlich des Tastenträgers und der Tasten ist jedoch unabhängig von der im Schritt S2 festzulegenden Variante des Tastenmoduls. Der im Schritt S1 bereitgestellte Tastenträger mit den Tasten kann somit gleich für alle denkbaren Varianten hergestellt werden. Somit ist der Produktionsaufwand auf ein Minimum reduziert.

Erst in einem nachfolgenden Schritt S3 werden die ausgewählten und bereits im Schritt S2 bezeichneten Tasten entriegelt, so dass sie an dem Tastenträger beweglich sind. Dies erfolgt im Ausführungsbeispiel auf eine solche Art und Weise, dass für jede ausgewählte Taste jeweils ein Halterelement bereitgestellt wird, welches in den Tastenträger eingesteckt wird.

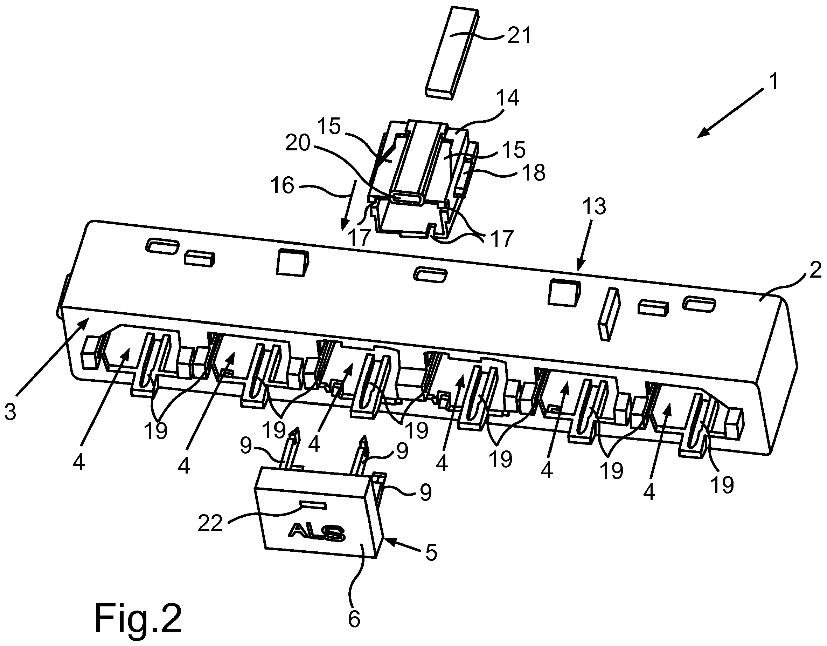

Ein solches Tastenmodul gemäß einer Ausführungsform der Erfindung ist in schematischer und perspektivischer Darstellung in Fig. 2 gezeigt und insgesamt mit 1 bezeichnet. Das Tastenmodul 1 umfasst einen Tastenträger 2, welcher beispielsweise aus Kunststoff bereitgestellt ist. Im Tastenträger 2 sind an einer Stirnseite 3 eine Vielzahl von Aufnahmeöffnungen bzw. Durchgangsöffnungen 4 ausgebildet. Über die Durchgangsöffnungen 4 können jeweilige Tasten 5 in den Tastenträger 2 eingeführt und eingerastet werden.

In Fig. 2 ist dabei eine einzige Taste 5 gezeigt; jedoch sind die benachbarten Tasten gleich aufgebaut und werden auf die gleiche Art und Weise am Tastenträger 2 montiert.

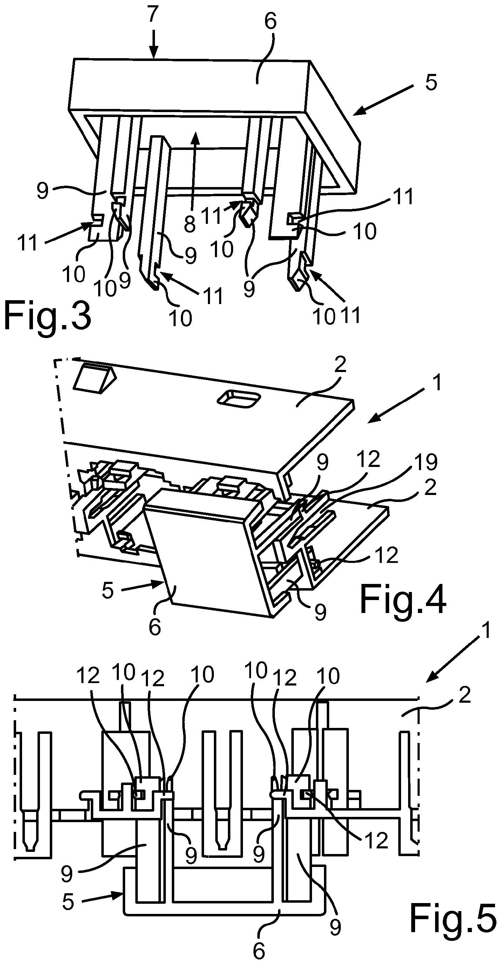

In Fig. 3 ist eine Taste 5 in schematischer und perspektivischer Darstellung näher gezeigt. Die Taste 5 weist einen Grundkörper bzw. ein Betätigungselement 6 auf, dessen Stirnseite 7 der Bedienperson und dessen Rückseite 8 dem Tastenträger 2 zugewandt ist. Vom Betätigungselement 6 - nämlich von der Rückseite 8 - stehen eine Vielzahl von Riegelschenkeln 9 als Verriegelungselemente ab, im Ausführungsbeispiel sechs Riegelschenkel 9. Die Riegelschenkel 9 stehen vom Betätigungselement 6 senkrecht zur Rückseite 8 ab. Das Betätigungselement 6 ist dabei haubenförmig beziehungsweise quaderförmig ausgebildet und nimmt in seinem Inneren die Riegelschenkel 9 teilweise auf. Jeder Riegelschenkel 9 ist ein biegbares Verriegelungselement, das heißt er ist elastisch und kann gebogen werden. Die Riegelschenkel 9 können beispielsweise aus Kunststoff bereitgestellt sein. Die Riegelschenkel 9 sind jedoch eigensteife Elemente.

Jeder Riegelschenkel 9 weist eine Rastnase 10 auf, die jeweils in eine Richtung weist, welche mit einer Biegerichtung des jeweiligen Riegelschenkels 9 einen Winkel von 90° einschließt. Die Rastnase 10 ist dabei am jeweiligen freien Ende des länglich ausgeführten Riegelschenkels 9 angeordnet. Die jeweiligen Rastnasen 10 sind dadurch gebildet, dass in den Riegelschenkeln 9 jeweils eine Aussparung 11 ausgebildet ist. Im Bereich der jeweiligen Rastnase 10 sind die Riegelschenkel 9 außerdem verjüngt ausgebildet, so dass sie jeweils ein keilförmiges freies Ende aufweisen.

Mit erneutem Bezug auf Fig. 2 werden die jeweiligen Tasten 5 und genauer gesagt die Riegelschenkel 9 in den Tastenträger 2 - in die jeweilige Durchgangsöffnung 4 - eingesteckt und mithilfe der Rastnasen 10 eingerastet. Somit wird im Schritt S1 ein Tastenmodul 1 bereitgestellt, bei welchem alle Tasten 5 verriegelt und somit unbeweglich sind. Im Schritt S2 erfolgt dann die Zuordnung der jeweiligen Funktionen durch beispielsweise Beschriftung, wie dies in Fig. 2 beispielhaft mit "ALS" dargestellt ist.

Ein solches Tastenmodul 1 mit einer verriegelten und somit unbeweglichen Taste 5 ist in den Figuren 4 und 5 in schematischer Darstellung gezeigt. Wie aus den Figuren 4 und 5 hervorgeht, werden die Tasten 5 im Tastenträger 2 mithilfe der jeweiligen Riegelschenkel 9 eingerastet. Wird die Taste 5 in den Tastenträger 2 eingesteckt, so treffen die Riegelschenkel 9 auf korrespondierende Rastelemente 12, die im Tastenträger 2 angeordnet sind. Die Rastelemente 12 werden in der jeweiligen Aussparung 11 des Riegelschenkels 9 eingerastet, und die Taste 5 wird somit verriegelt. Mit anderen Worten sind die Riegelschenkel 9 und die Rastelemente 12 derart aneinander angepasst, dass die Rastnasen 10 das jeweilige Rastelement 12 hintergreifen. Zwar ist in den Figuren 4 und 5 lediglich eine einzige Taste 5 gezeigt, jedoch werden alle anderen Tasten 5 auf die gleiche Art und Weise wie die gezeigte Taste 5 verriegelt.

Ist ein Tastenträger 2 mit verriegelten Tasten 5 (Figuren 4 und 5) bereitgestellt, so werden im Schritt S2 diejenigen Tasten 5 ausgewählt, die Funktionstasten werden sollen. Diese Tasten 5 werden bezeichnet.

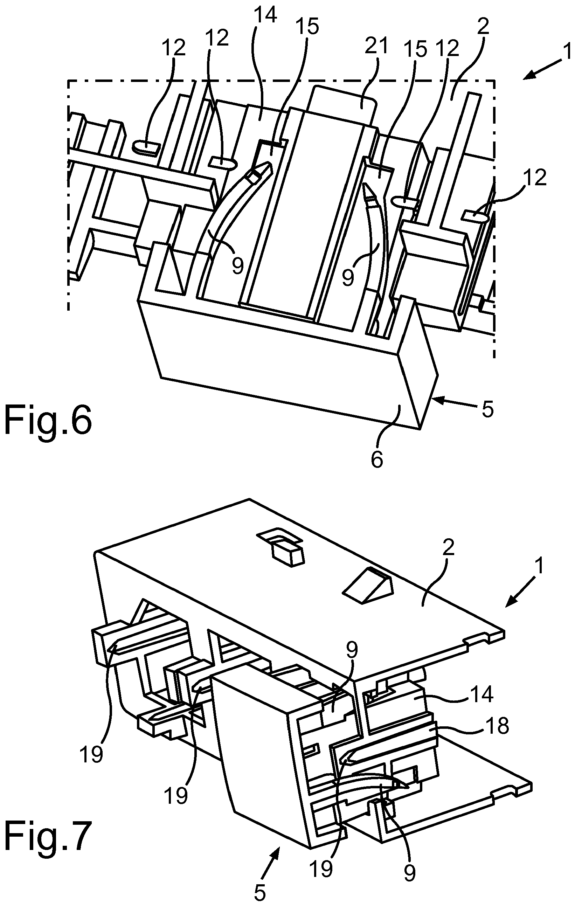

Im nachfolgenden Schritt S3 werden die ausgewählten Tasten 5 entriegelt. Zu diesem Zwecke wird in den Tastenträger 2 - von einer Rückseite 13 (siehe Fig. 2) - und gegenüber der zu entriegelnden Taste 5 ein Halterelement 14 eingesteckt. Bezug nehmend auf Fig. 2 ist das Halterelement 14 im Wesentlichen quaderförmig ausgebildet. Es weist für jeden Riegelschenkel 9 der Taste 5 jeweils eine Führung 15 auf, mittels welcher der jeweilige Riegelschenkel 9 aus einer in den Figuren 4 und 5 gezeigten Verriegelungsstellung in eine in den Figuren 6 und 7 gezeigte Entriegelungsstellung gebogen werden kann. Zu diesem Zwecke sind die Führungen 15 in Bezug auf eine Einsteckrichtung 16 - in welcher das Halterelement 14 in den Tastenträger 2 eingesteckt wird - schräg bzw. verjüngt ausgebildet. Die Führungen 15 sind in Form von Einbuchtungen ausgebildet. Aufgrund der jeweiligen Schräge können die Riegelschenkel 9 beim Einstecken des Halterelements 14 in die Entriegelungsstellung bewegt werden.

Das Halterelement 14 weist außerdem - an einer dem Tastenträger 2 zugewandten Seite - Aussparungen 17 auf, die zum Befestigen des Halterelements 14 an der Taste 5 mittels einer Rastverbindung und/oder einer Schnappverbindung dienen.

Also wird das Halterelement 14 in den Tastenträger 2 von der Rückseite 13 eingesteckt, nämlich gegenüber der jeweiligen Funktionstaste 5. Ein Tastenmodul 1 mit einem eingesteckten Halterelement 14 ist in den Figuren 6 und 7 gezeigt. Wie aus den Figuren 6 und 7 hervorgeht, befinden sich die Riegelschenkel 9 in der Entriegelungsstellung; sie sind nach innen beziehungsweise nach außen hin gebogen, nämlich mithilfe der Führungen 15. Wird das Halterelement 14 eingesteckt, so wird dieses an der Rückseite 8 der Taste 5 befestigt, so dass die Taste 5 zusammen mit dem Halterelement 14 bezüglich des Tastenträgers 2 verschiebbar ist. Die Taste 5 kann nun gedrückt werden, nämlich in Richtung senkrecht zur Stirnseite 3 des Tastenträgers 2. Dabei ist das Halterelement 14 in dem Tastenträger 2 verschiebbar gelagert. Zu diesem Zwecke weist das Halterelement 14 entlang der Einsteckrichtung 16 ausgebildete Führungselemente 18, etwa in Form eines Grates, auf, und der Tastenträger 2 weist für jedes Halterelement 14 korrespondierende Führungsnuten 19 auf.

Das Halterelement 14 weist außerdem eine entlang der Einsteckrichtung 16 beziehungsweise entlang einer Haupterstreckungsrichtung des Halterelements 14 ausgebildete Durchgangsöffnung 20 auf, in welche ein optisches Einsteckelement 21 (siehe Fig. 2) eingesteckt wird. Das Einsteckelement 21 hat die Funktion der Beleuchtung eines kleinen Bereichs 22 des Betätigungselements 6 der Taste 5. Über das Einsteckelement 21 kann somit Licht übertragen werden, und der Bereich 22 kann beleuchtet werden.

## Patentansprüche

1. Verfahren zum Herstellen eines Tastenmoduls (1) für ein Fahrzeug, wobei das Tastenmodul (1) bewegliche Funktionstasten, die jeweils mit einer Funktion in dem Fahrzeug verknüpft sind, und unbewegliche Blindtasten aufweist, die funktionslos sind, mit den Schritten:
- Bereitstellen eines Tastenträgers (2) mit daran angebrachten Tasten (5), wobei alle Tasten (5) an dem Tastenträger (2) lösbar verriegelt und hierdurch unbeweglich sind,
- Auswählen einer vorbestimmten Anzahl von Tasten (5) und Zuordnen jeweils einer Funktion zu den ausgewählten Tasten (5),
- Entriegeln nur derjenigen Tasten (5), denen eine Funktion zugeordnet wurde, so dass aus den entriegelten Tasten (5) Funktionstasten und aus den verriegelten Tasten (5) Bündtasten gebildet werden,
**dadurch gekennzeichnet, dass**
das Verriegeln der Tasten (5) mittels eines biegbaren Riegelschenkels (9), der Tasten (5) erfolgt.

2. Verfahren nach Anspruch 1,
**dadurch gekennzeichnet, dass**
der Schritt des Zuordnens der jeweiligen Funktion umfasst, dass die Tasten (5) bezeichnet, insbesondere beschriftet und/oder lackiert, werden.

3. Verfahren nach Anspruch 2,
**dadurch gekennzeichnet, dass**
das Bezeichnen der Tasten (5) durch Lasern erfolgt.

4. Verfahren nach einem der vorhergehenden Ansprüche,
**dadurch gekennzeichnet, dass**
der Schritt des Entriegelns einer Taste (5) umfasst, dass ein einsteckbares Halterelement (14) in den Tastenträger (2) eingesteckt wird, welches einen Riegelschenkel (9), der Taste (5) in eine Entriegelungsstellung bewegt.

5. Verfahren nach Anspruch 4,
**dadurch gekennzeichnet, dass**
das einsteckbare Halterelement (14) an der Taste (5) befestigt wird, so dass eine daraus gebildete Funktionstaste zusammen mit dem Halterelement (14) bezüglich des Tastenträgers (2) bewegt wird.

6. Tastenmodul (1) für ein Fahrzeug, mit einem Tastenträger (2) und zumindest einer an dem Tastenträger (2) gehaltenen Taste (5), umfassend ein Verriegelungselement (9) zum Verriegeln der Taste (5), welches zwischen einer Verriegelungsstellung, in welcher die Taste (5) als unbewegliche Blindtaste verriegelt ist, und einer Entriegelungsstellung, in welcher die Taste (5) als bewegliche Funktionstaste entriegelt ist, bewegbar ist **dadurch gekennzeichnet, dass** die Taste (5) das Verriegelungselement (9) aufweist und das Verriegelungselement (9) ein biegbarer Riegelschenkel (9) ist.

7. Tastenmodul (1) nach Anspruch 6,
**gekennzeichnet durch**
ein Halterelement (14) zum Einstecken in den Tastenträger (2), mittels welchem das Verriegelungselement (9) von der Verriegelungsstellung in die Entriegellungsstellung bewegbar ist.

8. Tastenmodul (1) nachAnspruch 7,
**dadurch gekennzeichnet, dass**
das Tastenmodul (1) zumindest zwei Tasten (5) und zu jeder Taste (5) jeweils zumindest ein genanntes Verriegelungselement (9) umfasst, wobei zumindest eine der Tasten (5) als unbewegliche Blindtaste verriegelt ist und zumindest eine der Tasten (5) als bewegliche Funktionstaste entriegelt ist.

## Claims

1. Method for producing a key module (1) for a vehicle, wherein the key module (1) has mobile function keys, which are each linked to a function in the vehicle, and immobile dummy keys which do not have a function, comprising the steps of:
- providing a key support (2) with keys (5) fitted on it, wherein all of the keys (5) are locked in a releasable manner to the key support (2) and as a result are immobile,
- selecting a predetermined number of keys (5) and assigning in each case one function to the selected keys (5),
- unlocking only those keys (5) to which a function has been assigned, so that function keys are formed from the unlocked keys (5) and dummy keys are formed from the locked keys (5),
**characterized in that**
the keys (5) are locked by means of a flexible latching limb (9) of the keys (5).

2. Method according to Claim 1,
**characterized in that**
the step of assigning the respective function comprises the keys (5) being marked, in particular labelled and/or painted.

3. Method according to Claim 2,
**characterized in that**
the keys (5) are marked by laser.

4. Method according to one of the preceding claims, **characterized in that**
the step of unlocking a key (5) comprises an insertable holder element (14) being inserted into the key support (2) and moving a latching limb (9) of the key (5) to an unlocking position.

5. Method according to Claim 4,
**characterized in that**
the insertable holder element (14) is fastened to the key (5), so that a function key which is formed as a result is moved together with the holder element (14) with respect to the key support (2).

6. Key module (1) for a vehicle, comprising a key support (2) and at least one key (5) which is held on the key support (2), comprising a locking element (9) for locking the key (5), which locking element can be moved between a locking position, in which the key (5) is locked as an immobile dummy key, and an unlocking position, in which the key (5) is unlocked as a mobile function key, **characterized in that** the key (5) has the locking element (9), and the locking element (9) is a flexible latching limb (9).

7. Key module (1) according to Claim 6,
**characterized by**
a holder element (14) which is to be inserted into the key support (2) and by means of which the locking element (9) can be moved from the locking position to the unlocking position.

8. Key module (1) according to Claim 7,
**characterized in that**
the key module (1) comprises at least two keys (5) and, for each key (5), in each case at least one said locking element (9), wherein at least one of the keys (5) is locked as an immobile dummy key and at least one of the keys (5) is unlocked as a mobile function key.

## Revendications

1. Procédé de fabrication d'un module de touches (1) destiné à un véhicule, dans lequel le module de touches (1) comporte des touches de fonction qui sont respectivement combinées à une fonction dans le véhicule, et des touches factices immobiles qui ne présentent aucune fonction, comportant les étapes consistant à :
- fournir un support de touches (2) sur lequel sont montées des touches (5), dans lequel toutes les touches (5) sont verrouillées de manière amovible au support de touches (2) et sont ainsi immobiles,
- sélectionner un nombre prédéterminé de touches (5) et associer une fonction respective aux touches (5) sélectionnées,
- ne déverrouiller que les touches (5) auxquelles une fonction a été associée de manière à ce que des touches de fonction soient formées à partir des touches (5) déverrouillées et à ce que des touches factices soient formées à partir des touches (5) verrouillées, **caractérisé en ce que** le verrouillage des touches (5) est effectué au moyen d'une patte de verrouillage flexible (9) des touches (5).

2. Procédé selon la revendication 1, **caractérisé en ce que** l'étape d'association de la fonction respective consiste à désigner, notamment à étiqueter et/ou à peindre les touches (5).

3. Procédé selon la revendication 2, **caractérisé en ce que** la désignation des touches (5) s'effectue au moyen de lasers.

4. Procédé selon l'une quelconque des revendications précédentes, **caractérisé en ce que** l'étape de déverrouillage d'une touche (5) consiste à enficher un élément de maintien (14) enfichable dans le support de touches (2), lequel élément de maintien déplace une patte de verrouillage (9) de la touche (5) à une position de déverrouillage.

5. Procédé selon la revendication 4, **caractérisé en ce qu'**un élément de maintien enfichable (14) est fixé à la touche (5) de manière à ce qu'une touche de fonction formée à partir de celle-ci soit déplacée en association avec l'élément de maintien (14) par rapport au support de touches (2).

6. Module de touches (1) destiné à un véhicule, comportant un support de touches (2) et au moins une touche (5) maintenue sur le support de touches (2), comprenant un élément de verrouillage (9) destiné à verrouiller la touche (5), lequel élément de verrouillage est mobile entre une position de verrouillage à laquelle la touche (5) est verrouillée en tant que touche factice immobile et une position de déverrouillage à laquelle la touche (5) est déverrouillée en tant que touche de fonction mobile, **caractérisé en ce que** la touche (5) comporte l'élément de verrouillage (9) et **en ce que** l'élément de verrouillage (9) est une patte de verrouillage flexible (9).

7. Module de touches (1) selon la revendication 6, **caractérisé par** un élément de maintien (14) destiné à être enfiché dans le support de touches (2), au moyen duquel l'élément de verrouillage (9) peut être déplacé de la position de verrouillage à la position de déverrouillage.

8. Module de touches (1) selon la revendication 7, **caractérisé en ce que** le module de touches (1) comprend au moins deux touches (5) et, pour chacune des touches (5), comprend respectivement au moins l'un desdits éléments de verrouillage (9), dans lequel au moins l'une des touches (5) est verrouillée en tant que touche factice immobile et **en ce qu'**au moins l'une des touches (5) est déverrouillée en tant que touche de fonction mobile.
